## Europäisches Patentamt

## European Patent Office

## Office européen des brevets

(19)

(11) Veröffentlichungsnummer: **0 407 797 A1**

# EUROPÄISCHE PATENTANMELDUNG

(12)

(21) Anmeldenummer: 90112079.0

(22) Anmeldetag: 26.06.90

(51) Int. Cl.⁵: **B29C 45/38**

(30) Priorität: 08.07.89 DE 3922520

(43) Veröffentlichungstag der Anmeldung:
16.01.91 Patentblatt 91/03

(84) Benannte Vertragsstaaten:
**AT DE FR GB IT**

(71) Anmelder: **BAYER AG**

**D-5090 Leverkusen 1 Bayerwerk(DE)**

(72) Erfinder: **Vente, Paul**
**Pregelstrasse 26**
**D-5090 Leverkusen 1(DE)**
Erfinder: **Meussdoerffer, Johann Nikolaus, Dr.**
**Paul-Klee-Strasse 61**
**D-5090 Leverkusen 1(DE)**

(54) **Verfahren und Vorrichtung zum automatischen Entfernen von Angüssen bei Kaltkanal-Werkzeugen.**

(57) Die vorliegende Erfindung betrifft ein Verfahren zum automatischen Entfernen von kleinen Angüssen bei Kaltkanal-Werkzeugen, um damit die Verarbeitung von im Spritzgußverfahren verarbeitbaren Stoffen, insbesondere von Flüssigsilicon-Kautschuk (LSR) möglichst wirtschaftlich zu gestalten. Die Erfindung betrifft ferner eine Vorrichtung zur Durchführung des erfindungsgemäßen Verfahrens mit einer Schieberplatte (4) zur Separierung der Angüsse (7) mit Hilfe von Auswerferstiften (8).

FIG. 2

EP 0 407 797 A1

# VERFAHREN UND VORRICHTUNG ZUM AUTOMATISCHEN ENTFERNEN VON ANGÜSSEN BEI KALTKANAL-WERKZEUGEN

Die vorliegende Erfindung betrifft ein Verfahren zum automatischen Entfernen von kleinen Angüssen bei Kaltkanal-Werkzeugen, um damit die Verarbeitung von im Spritzgußverfahren verarbeitbaren Stoffen, insbesondere von Flüssigsilicon-Kautschuk (LSR) möglichst wirtschaftlich zu gestalten. Die Erfindung betrifft ferner eine Vorrichtung zur Durchführung des erfindungsgemäßen Verfahrens.

LSR ist ein Zweikomponenten Flüssigsilikonkautschuk, der durch die Einwirkung von hohen Temperaturen vulkanisiert werden kann. Stand der Technik war bisher zunächst die Verarbeitung von LSR im Spritzgußverfahren, wobei über eine Dosieranlage das Material über einen heißen Kanal in die auf Reaktionstemperatur erhitzte Form gelangte; da das LSR natürlich auch in dem heißen Kanal vulkanisierte, muß dieser Anguß vom eigentlichen Teil entfernt werden und stellt damit einen nicht wieder verwendbaren Materialverlust dar.

Zur Vermeidung dieses Verlustes wurde versucht, das Verfahren auf ein nach dem Kaltkanal-Prinzip arbeitendes Verfahren umzustellen, um so die Vulkanisation in der Zuführungsleitung zu verhindern; das Problem dabei ist allerdings, daß die Form selbst zur Herstellung des Artikels auf Vulkanisationstemperatur gehalten werden muß, der Zulaufkanal selbst aber wieder Raumtemperatur haben muß.

Es ist daher naheliegend, daß in der Temperaturübergangszone sowohl bei direkt wie auch indirekt angespritzten Teilen durch ungewollte Vulkanisation eine Restangußstange verbleibt; dieser Angußrest wird üblicherweise durch Nacharbeitung von Hand aufwendig entfernt.

Die Ausbildung dieses Angusses ist aus Gründen der Temperaturführung in der Metallform Stand der Technik, sowohl bei offenen Kaltkanalsystemen als auch bei Nadelverschlußsystemen.

Der Erfindung liegt nun insbesondere der Gedanke zugrunde, den ausvulkanisierten Restanguß automatisch während des Entformungsvorganges abzutrennen; dieser Vorgang wird durch den Einbau eines Schiebers in die Trennzone des Werkzeuges erreicht, wobei dieser zunächst den Restanguß während des Auffahrens abreißt und anschließend über eine Ausstoßvorrichtung diesen Restguß entfernt. Ein zusätzlicher Vorteil dieses Schiebers ist die bessere Beheizung der eigentlichen Kavität, d.h. Trennung von hohen und tiefen Temperaturbereichen im Werkzeug, um so mit Sicherheit eine ungewollte Vulkanisation in den Zuführungsleitungen zu verhindern.

Das Verfahren soll anhand einer schematischen Darstellung veranschaulicht werden:

Fig. 1: Hier ist im Querschnitt das Spritzgußwerkzeug bei eingefahrenem Schieber mit noch geöffneter Trennebene I gezeigt, wobei das LSR nach Zusammenfahren des Werkzeuges über den bei ca. 20° C bis 60° C gehaltenen Kaltkanalteil in den auf ca. 220° C beheizten Teil fließt; zwischen beiden Teilen herrscht eine Temperaturdifferenz von bis zu ca. 200° C.

Fig. 2: Hier ist das Werkzeug bereits aufgefahren und gleichzeitig der Schieber seitlich herausgefahren, so daß über eine Ausstoßvorrichtung der Kanal im Schieber von den ausvulkanisierten Restgüssen leicht gereinigt werden kann.

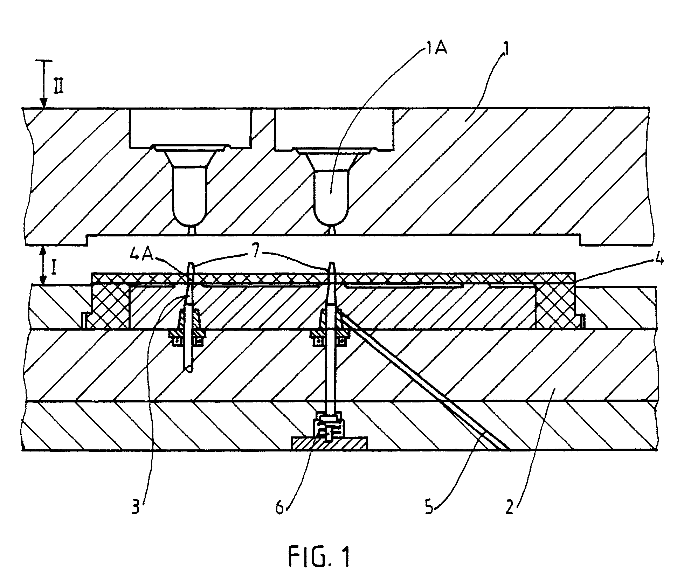

In den Figuren bedeuten die einzelnen Zahlen folgende Teile: zu Fig. 1:

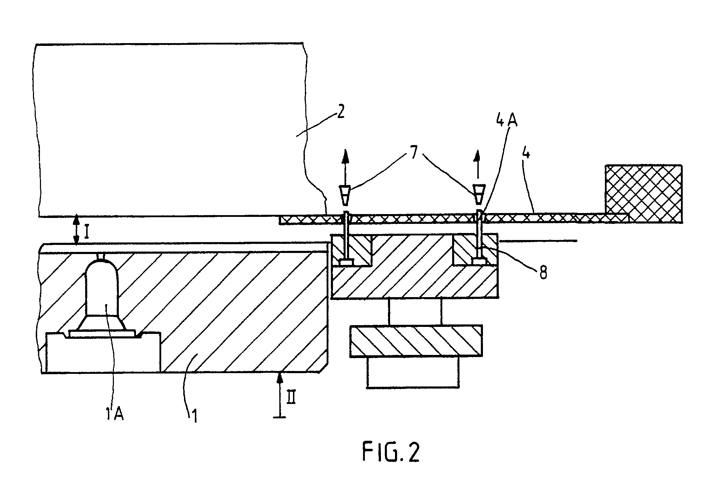

1) Kavität der LSR-Formartikel
2) Angußblock
3) Nadelverschlußdüse
4) Schieberplatte
5) Zuführungskanal für LSR
6) Federpaket für Nadelverschluß
7) Anguß aus LSR
   Zu Fig. 2:
8) automatische, hydraulische Auswerferstifte

## Ansprüche

1. Verfahren zur Herstellung gespritzter Formkörper aus Materialien, die im Spritzgußverfahren verarbeitbar sind, dadurch gekennzeichnet, daß vor der Entformung des gespritzten Formkörpers die im Angußkanal verbliebenen Materialreste durch eine zusätzliche Schiebevorrichtung vom Fertigteil getrennt und entfernt werden.

2. Verfahren nach Anspruch 1, dadurch gekennzeichnet, daß als Spritzgußmaterial Flüssig-Siliconkautschuk eingesetzt wird.

3. Vorrichtung zur Herstellung von gespritzten Formkörpern bestehend aus Kavitäten für die Formartikel (1) und dem Angußblock 2), der wiederum aus den Spritzgußmaterialzuleitungen 5) mit den Nadelverschlußdüsen 3) (Kaltkanal) und einer Schieberplatte 4) zur Separierung der Angüsse 7) mit Hilfe von automatischen Auswerferstiften 8) besteht.

FIG. 1

FIG.2

Europäisches
Patentamt

**EUROPÄISCHER RECHERCHENBERICHT**

Nummer der Anmeldung

EP 90112079.0

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | US - A - 4 077 760<br>(SAUER)<br>  * Fig. 1,2; Spalte 2, Zeilen 65-68 * | 1 | B 29 C 45/38 |
| A | | 3 | |
| A | DE - C - 900 748<br>(RHEINISCH-WESTFÄLISCHES KUNSTSTOFFWERK)<br>  * Gesamt * | 1,3 | |

| | RECHERCHIERTE SACHGEBIETE (Int Cl⁵) |
|---|---|
| | B 29 C |

Der vorliegende Recherchenbericht wurde für alle Patentansprüche erstellt.

| Recherchenort | Abschlußdatum der Recherche | Prüfer |
|---|---|---|
| WIEN | 25-10-1990 | MAYER |